# FASCICULE DE BREVET EUROPEEN

(11) **EP 2 627 228 B1**
(45) Date de publication et mention de la délivrance du brevet: **02.09.2015**
(21) Numéro de dépôt: 11831830.2
(22) Date de dépôt: 12.10.2011
(51) Int. Cl.: A47J 31/52, A47J 31/36, A47J 31/40

(54) **MACHINE À BOISSONS COMMUNICANTE**
KOMMUNIZIERENDER GETRÄNKEAUTOMAT
COMMUNICATING DRINKS MACHINE

(30) Priorité: 13.10.2010 FR 1004035
(43) Date de publication de la demande: 21.08.2013
(73) Titulaire: Withings, 92130 Issy Les Moulineaux (FR)
(72) Inventeur: POTTER, Frédéric, F-92200 Neuilly-sur-seine (FR); ROMERO, Louis, F-63800 Cournon D'auvergne (FR)
(74) Mandataire: Cabinet Plasseraud
(86) Numéro de dépôt international: PCT/FR2011/052382
(87) Numéro de publication internationale: WO 2012/049426

(56) Documents cités:
- EP-A1- 1 593 329
- EP-A1- 2 085 000
- EP-A1- 2 345 352
- WO-A1-2005/063091

## Description

La présente invention est relative aux machines à préparer des boissons et aux systèmes incluant de telles machines.

Plus particulièrement, l'invention concerne un système comprenant :
a) une machine de préparation de boissons utilisant des capsules de produit pour boisson alimentaire, la machine étant adaptée pour accepter une pluralité de différents types de capsules, la machine comprenant :
   - un réceptacle adapté pour recevoir une capsule,
   - un capteur d'acquisition adapté pour acquérir au moins une caractéristique d'identification propre à chaque type de capsule accepté par la machine,
   - une unité de contrôle reliée audit capteur d'acquisition pour recevoir ladite au moins caractéristique d'identification,
   - des moyens de communications adaptés pour permettre la connexion de l'unité de contrôle au réseau Internet et transmettre la ladite au moins caractéristique d'identification,
b) au moins un serveur informatique connecté à Internet, adapté pour recevoir ladite au moins caractéristique d'identification transmise par les moyens de communication.

Un tel système est connu, par exemple du document EP-A-2085000. Mais dans ce document, l'unité de contrôle doit pouvoir déterminer le type de capsule utilisé, ce qui nécessite des moyens de traitement et un stockage en local d'un ensemble de caractéristiques d'identification des types de capsule, ce qui complique notablement ladite unité de contrôle et peut nécessiter des mises à jour de cette unité de contrôle lorsque les caractéristiques des capsules sont modifiées par leur fabricant.

La présente invention a notamment pour but de remédier aux inconvénients de l'art antérieur.

A cet effet, selon l'invention, ledit serveur comprend un ensemble d'informations de référence relatives à une gamme de types de capsules et des moyens de traitement pour identifier le type de capsule utilisé à partir la ladite au moins caractéristique d'identification reçue en provenance de la machine et de l'ensemble d'informations de référence.

Grâce à ces dispositions, l'unité de contrôle de la machine de préparation de boissons peut être simplifiée, et l'ensemble d'informations de référence relatives à une gamme de types de capsules peut être géré de façon centralisée dans le serveur.

Dans divers modes de réalisation de l'invention, on peut éventuellement avoir recours en outre à l'une et/ou à l'autre des dispositions suivantes prises isolément ou en combinaison:
- la machine de préparation de boissons est adaptée pour préparer au moins une boisson alimentaire choisie dans le groupe comprenant le café et le thé et les soupes;
- le capteur est un capteur optique, la machine comprend une source de lumière, et l'unité de contrôle est adaptée pour déterminer ladite au moins caractéristique d'identification en effectuant deux mesures, une mesure avec un éclairage forcé au moyen de la source de lumière, et une mesure sans éclairage forcé ;
- le capteur est un capteur optique et l'ensemble d'informations de référence comprend pour chaque type de capsule deux couleurs caractéristiques d'identification, une couleur réfléchie et une couleur absorbée et réémise.

Selon un autre aspect, l'invention vise également un procédé pour identifier un type de capsule de produit pour boisson alimentaire, adapté pour être utilisé dans une machine de préparation de boissons qui peut être connectée à un serveur informatique comprenant un ensemble d'informations de référence, comprenant les étapes :
. on acquiert au moyen d'un capteur dans la machine au moins une caractéristique d'identification propre à une capsule chargée dans la machine,
. on transmet cette caractéristique d'identification de la machine vers le serveur informatique,
. on compare, dans le serveur informatique, cette caractéristique d'identification avec un ensemble d'informations de référence,
. on en déduit le type de capsule chargé dans la machine.

En outre le procédé peut également comporter les étapes suivantes :
. on acquiert deux mesures, une première mesure avec un éclairage forcé au moyen d'une source de lumière, et une deuxième mesure sans éclairage forcé,
. on soustrait/compare, dans le serveur, la deuxième mesure à la première,
. on en déduit le type de capsule chargé dans la machine.

De plus, il peut y être adjoint la caractéristique suivante : l'ensemble d'informations de référence contient pour chaque type de capsule une couleur réfléchie et une couleur absorbée et réémise qui définissent ensemble un volume prédéfini de caractérisation dans l'espace de couleurs Rouge-Vert-Bleu pour chaque type de capsule englobant les deux dites mesures, le procédé comportant les étapes :
. on compare, dans le serveur informatique, cette caractéristique d'identification reçue avec chacun des volumes prédéfinis connus,
. on en déduit, par un calcul de proximité, le type de capsule chargé dans la machine.

Par ailleurs l'invention vise également une machine de préparation de boissons utilisant des capsules de produit pour boisson alimentaire, la machine étant adaptée pour accepter une pluralité de différents types de capsules, la machine comprenant :
. un réceptacle adapté pour recevoir une capsule,
. un capteur d'acquisition optique adapté pour acquérir au moins une caractéristique d'identification optique propre à chaque type de capsule acceptée par la machine,
. une unité de contrôle reliée audit capteur d'acquisition optique pour recevoir ladite au moins caractéristique d'identification,
. un ensemble d'informations de référence relatives à une gamme de types de capsules acceptés,
. des moyens de traitement pour identifier le type de capsule utilisé à partir la ladite au moins caractéristique d'identification optique et de l'ensemble d'informations de référencer,
. une source de lumière,

L'unité de contrôle étant adaptée pour déterminer ladite au moins caractéristique d'identification optique en effectuant deux mesures, une mesure avec un éclairage forcé au moyen de la source de lumière, et une mesure sans éclairage forcé.

Par ailleurs l'invention vise également une machine de préparation de boissons utilisant des capsules de produit pour boisson alimentaire, la machine étant adaptée pour accepter une pluralité de différents types de capsules, la machine comprenant :
. un réceptacle adapté pour recevoir une capsule,
. un capteur d'acquisition optique adapté pour acquérir au moins une caractéristique d'identification optique propre à chaque type de capsule acceptée par la machine,
. une unité de contrôle reliée audit capteur d'acquisition optique pour recevoir ladite au moins caractéristique d'identification,
. un ensemble d'informations de référence relatives à une gamme de types de capsules acceptées, contenant pour chaque type de capsule une couleur réfléchie et une couleur absorbée et réémise qui définissent ensemble un volume prédéfini de caractérisation dans l'espace de couleurs Rouge-Vert-Bleu pour chaque type de capsule,
. des moyens de traitement pour identifier le type de capsule utilisé à partir la ladite au moins caractéristique d'identification optique et des volumes prédéfinis dans l'espace de couleurs Rouge-Vert-Bleu de l'ensemble d'informations de référence.

D'autres aspects, buts et avantages de l'invention apparaîtront à la lecture de la description suivante d'un de ses modes de réalisation, donné à titre d'exemple non limitatif. L'invention sera également mieux comprise en regard des dessins joints sur lesquels :
- la figure 1 est une vue de face de la machine de préparation de boissons utilisée dans l'invention, avec un écorché partiel,
- la figure 2 est un schéma représentant le système selon l'invention, et
- la figure 3 est un graphique montrant les positions des caractéristiques d'identification dans l'espace des couleurs rouge-vert-bleu.

Sur les différentes figures, les mêmes références désignent des éléments identiques ou similaires.

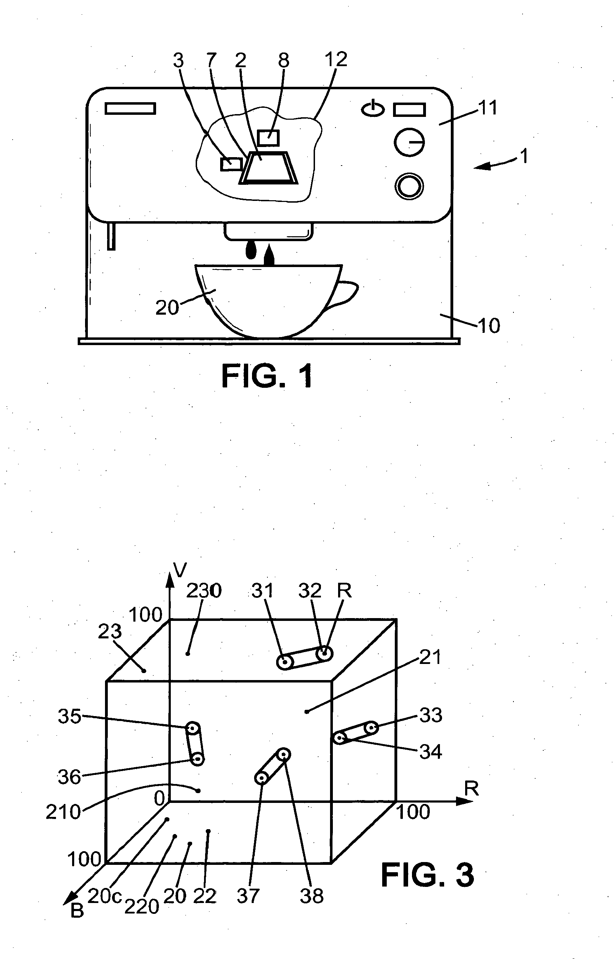

La figure 1 représente une vue de face de la machine de préparation de boissons.

Ladite machine utilise des capsules 2 de produit pour boisson alimentaire, et ladite machine est adaptée pour accepter une pluralité de différents types de capsules.

Ladite machine est adaptée pour accepter des capsules de boisson alimentaire comme des capsules de café ou de thé, mais d'autre boisson ne sont pas exclues, comme par exemple des soupes.

La machine 1 comprend une embase 10 adaptée pour supporter le reste de la machine et pour recevoir un récipient 20 recevant de la boisson préparée par la machine.

La partie supérieure 11 de ma machine comprend divers organes de commande. A l'intérieur de la machine, dans la zone écorchée 12, sont représentés :
- un réceptacle 7 adapté pour recevoir une capsule de produit pour boisson alimentaire, la machine et le réceptacle étant adaptés pour accepter ladite pluralité de différents types de capsules,
- un capteur d'acquisition 3 adapté pour acquérir au moins une caractéristique d'identification propre à chaque type de capsule accepté par la machine, ladite caractéristique d'identification sera précisée plus loin,
- une source de lumière 8, adaptée pour illuminer la capsule dans le réceptacle lorsque cette source de lumière est activée.

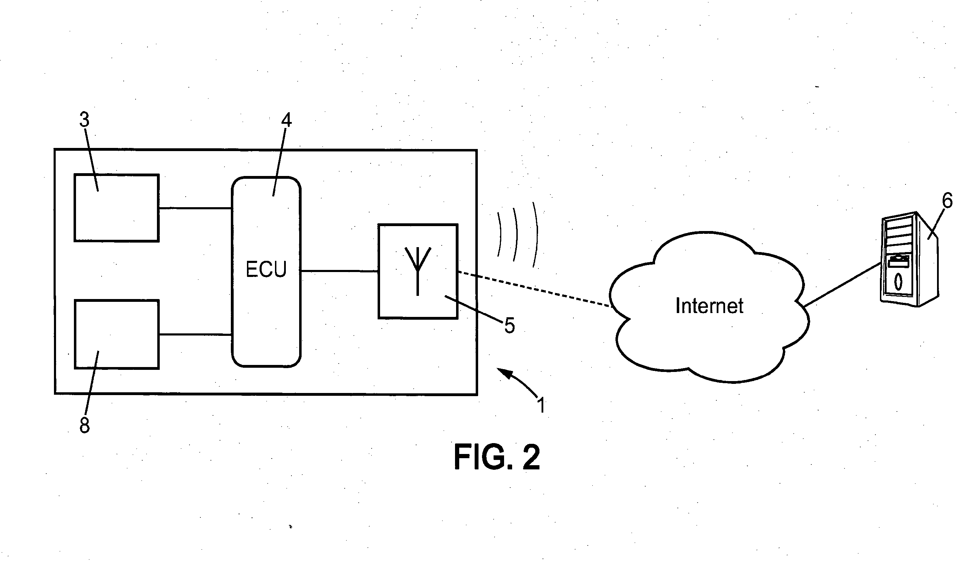

Par ailleurs, comme représenté sur la figure 2, la machine 1 comprend une unité de contrôle 4 et des moyens de communications 5.

L'unité de contrôle 4 est reliée audit capteur d'acquisition 3 pour recevoir ladite caractéristique d'identification et est également reliée à la source de lumière 8 pour commander l'activation ou la désactivation de celle-ci. En outre, l'unité de contrôle 4 est reliée aux moyens de communication 5 par des moyens connus.

Les moyens de communications 5 sont adaptés pour permettre la connexion de l'unité de contrôle au réseau Internet 50 et transmettre la ladite caractéristique d'identification vers ce réseau. Lesdits moyens de communication 5 peuvent par exemple prendre la forme d'un coupleur réseau filaire, ou d'une interface sans fil, par exemple WiFi, ou d'une interface sans fil de toute nature connue. Le cas échéant, la connexion Internet peut être établie en passant par un équipement domestique situé non loin de la machine 1.

La figure 2 présente un diagramme représentant le système selon l'invention, qui comprend, outre la machine déjà décrite, un serveur informatique 6 connecté à Internet. Ce serveur informatique 6 est adapté pour recevoir ladite caractéristique d'identification transmise par les moyens de communication 5.

Plus particulièrement, ledit serveur comprend un ensemble d'informations de référence relatives à une gamme de types de capsules.

De plus ledit serveur comprend des moyens de traitement pour identifier le type de capsule utilisé à partir la ladite caractéristique d'identification reçue en provenance de la machine et de l'ensemble d'informations de référence.

La caractéristique d'identification peut être une caractéristique dimensionnelle, de poids, de forme. Si tel est le cas, l'ensemble d'informations de référence comportera des dimensions, poids, facteurs de forme correspondants aux caractéristiques d'identification de chaque type de capsule.

La caractéristique d'identification peut aussi être une caractéristique de la couleur de l'enveloppe de la capsule 2. Dans ce cas, le capteur d'acquisition 3 est un capteur optique adapté pour acquérir une caractéristique d'identification de couleur, et l'ensemble d'informations de référence comportera des caractéristiques d'identification de couleur par exemple sous formes de coordonnées dans l'espace des couleurs Rouge-Vert-Bleu.

Avantageusement selon l'invention, il est prévu d'acquérir une première caractéristique d'identification de couleur en présence d'un éclairage forcé généré par la source de lumière 8, puis une seconde caractéristique d'identification de couleur sans la présence d'un éclairage forcé (source de lumière 8 éteinte).

Selon un premier aspect, un type de capsule peut être connu dans l'ensemble d'informations de référence par un point de référence 21,22,23 dans l'espace Rouge-Vert-Bleu. Une caractéristique d'identification de couleur reçue 20 par le serveur 6 en provenance de la machine 1 est comparée aux points de référence connus 21,22,23 dans l'ensemble d'informations de référence. Les moyens de traitement peuvent comprendre des calculs de distance entre le point représentant la caractéristique d'identification de couleur reçue 20 et les points de référence connus dans l'ensemble d'informations de référence. Le point de référence 22 identifié comme le plus proche du point représentant la caractéristique d'identification de couleur reçue 20 sera donc retenu comme celui représentant la couleur du type de la capsule utilisée dans la machine.

Selon un deuxième aspect, deux caractéristiques de couleur sont acquises dans la machine, une première 20a acquise avec présence de la source de lumière et une seconde 20b acquise en l'absence de la source de lumière. Ces deux caractéristiques d'identification de couleur 20a,20b sont transmises au serveur 6. Les moyens de traitement dans le serveur sont adaptés pour calculer une différence de couleur 20c entre les deux mesures, à savoir la deuxième (lumière Off) soustraite à la première (lumière On). Par ailleurs, l'ensemble d'informations de référence comprend des points des points de références 210,220,230 caractéristiques des différences de couleur mesurées sur des capsules de type connus.

Un algorithme de décision sélectionne le point de référence qui donne la distance la plus faible entre la différence de couleur obtenue des mesures transmises par la machine et les points de référence, en l'occurrence le point 220 sur la Figure 3.

L'avantage technique de la méthode de différence de couleur exposée ci avant est d'éliminer l'effet de l'éclairage ambiant qui peut parvenir dans la zone de la capsule. Etant donné que cet éclairage ambiant est présent dans les deux mesures, qui se succèdent rapidement dans le temps et peut être considéré constant, l'éclairage ambiant est éliminé du résultat de l'opération de différence et le résultat contient essentiellement l'effet de la réflexion de l'éclairage forcé. Les points de références 210,220,230 caractéristiques des différences de couleur pour chaque type de capsule ont aussi été obtenus par cette méthode.

Selon un troisième aspect, en référence à la figure 3, un type de capsule est caractérisé non plus par un point dans l'espace Rouge-Vert-Bleu mais par un volume caractéristique de type tubulaire défini par deux points caractéristiques 31,32 définissant les extrémités du tuyau et un rayon R définissant l'épaisseur du tuyau. Pour chaque type de capsule, le premier point 31 est caractéristique la d'identification de la couleur réfléchie et le second point 32 est caractéristique d'identification de la couleur absorbée et réémise.

Une caractéristique d'identification de couleur reçue par le serveur 6 en provenance de la machine 1 est comparée aux volumes caractéristiques 31-32, 33-34, 35-36, 37-38 contenus dans l'ensemble d'informations de référence. Le volume caractéristique étant le plus proche de la caractéristique reçue 20, en l'occurrence 35-36, est celui qui donne le type de capsule utilisé.

Il est à noter qu'on peut aussi combiner la double acquisition (avec ou sans source de lumière) avec la comparaison avec les volumes caractéristiques qui vient d'être décrite.

Dans le système selon l'invention, l'ensemble d'informations de référence peut être mis à jour sur le serveur indépendamment de la machine, la gamme des types acceptés pouvant être élargie. Ainsi, lorsque de nouveaux types de capsules sont introduits sur le marché, il n'est nul besoin de modifier l'unité de contrôle de la machine, il suffit de mettre à jour l'ensemble d'informations de référence contenu dans le serveur 6.

Il est à noter que ce qui a été décrit concernant les deux mesures (avec et sans éclairage par la source lumineuse) peut aussi être utilisé avec le fait que l'ensemble d'informations de référence est contenu localement sur la machine et non à distance sur le serveur, et que la machine contient dans ce cas des moyens de traitement pour identifier le type de capsule utilisé à partir la ladite au moins caractéristique d'identification et de l'ensemble d'informations de référence.

De même, il est à noter que ce qui a été décrit concernant les volumes caractéristiques de type tubulaire dans l'espace Rouge-Vert-Bleu pourrait être utilisé avec le fait que l'ensemble d'informations de référence est contenu localement sur la machine et non à distance sur le serveur.

## Revendications

1. Système (10) comprenant
a) une machine (1) de préparation de boissons utilisant des capsules (2) de produit pour boisson alimentaire, la machine étant adaptée pour accepter une pluralité de différents types de capsules, la machine comprenant :
. un réceptacle (7) adapté pour recevoir une capsule (2),
. un capteur d'acquisition (3) adapté pour acquérir au moins une caractéristique d'identification propre à chaque type de capsule acceptée par la machine,
. une unité de contrôle (4) reliée audit capteur d'acquisition (3) pour recevoir ladite au moins caractéristique d'identification,
. des moyens de communications (5) adaptés pour permettre la connexion de l'unité de contrôle au réseau Internet et transmettre la ladite au moins caractéristique d'identification,
b) au moins un serveur informatique (6) connecté à Internet (50), adapté pour recevoir ladite au moins caractéristique d'identification transmise par les moyens de communication, ledit serveur comprenant un ensemble d'informations de référence relatives à une gamme de types de capsules et des moyens de traitement pour identifier le type de capsule utilisé à partir la ladite au moins caractéristique d'identification reçue et de l'ensemble d'informations de référence,
**caractérisé en ce que** la caractéristique d'identification comprend une caractéristique de couleur de l'enveloppe de la capsule.

2. Système selon la revendication 1, dans lequel la machine de préparation de boissons est adaptée pour préparer au moins une boisson alimentaire choisie dans le groupe comprenant le café, le thé et les soupes.

3. Système selon l'une des revendications précédentes, dans lequel le capteur est un capteur optique, et dans lequel la machine comprend une source de lumière (8) et l'unité de contrôle est adaptée pour déterminer ladite au moins caractéristique d'identification en effectuant deux mesures, une mesure avec un éclairage forcé au moyen de la source de lumière (8), et une mesure sans éclairage forcé.

4. Système selon l'une des revendications précédentes, dans lequel le capteur est un capteur optique et dans lequel l'ensemble d'informations de référence comprend pour chaque type de capsule deux couleurs caractéristiques d'identification, une couleur réfléchie (31) et une couleur absorbée et réémise (32).

5. Procédé pour identifier un type de capsule de produit pour boisson alimentaire, adapté pour être utilisé dans une machine de préparation de boissons qui peut être connectée à un serveur informatique comprenant un ensemble d'informations de référence, comprenant les étapes :
- on acquiert au moyen d'un capteur dans la machine au moins une caractéristique d'identification propre à une capsule chargée dans la machine, la caractéristique d'identification comprenant une caractéristique de couleur de l'enveloppe de la capsule,
- on transmet cette caractéristique d'identification de la machine vers le serveur informatique,
- on compare, dans le serveur informatique, cette caractéristique d'identification avec un ensemble d'informations de référence,
- on en déduit le type de capsule chargé dans la machine.

6. Procédé pour identifier un type de capsule de produit pour boisson alimentaire selon la revendication 5, dans lequel
- on acquiert deux mesures, une première mesure avec un éclairage forcé au moyen d'une source de lumière (8), et une deuxième mesure sans éclairage forcé,
- on soustrait/compare, dans le serveur, la deuxième mesure à la première,
- on en déduit le type de capsule chargé dans la machine.

7. Procédé pour identifier un type de capsule de produit pour boisson alimentaire selon la revendication 5, dans lequel l'ensemble d'informations de référence contient pour chaque type de capsule une couleur réfléchie (31) et une couleur absorbée et réémise (32) qui définissent ensemble un volume prédéfini de caractérisation dans l'espace de couleurs Rouge-Vert-Bleu pour chaque type de capsule englobant les deux dites mesures, procédé dans lequel
- on compare, dans le serveur informatique, cette caractéristique d'identification reçue avec chacun des volumes prédéfinis connus,
- on en déduit, par un calcul de proximité, le type de capsule chargé dans la machine.

## Patentansprüche

1. System (10) mit:
a) einem Getränkeautomaten (1) zum Zubereiten von Getränken unter Verwendung von Produktkapseln (2) für Getränke oder flüssige Nahrungsmittel, wobei der Automat mehrere unterschiedliche Kapseltypen akzeptieren kann, wobei der Automat aufweist:
- eine Empfangseinrichtung (7) zur Entgegennahme einer Kapsel (2),
- einen Erfassungssensor (3) zum Erfassen mindestens eines Identifikationsmerkmals, das jedem von dem Automaten akzeptierten Kapseltyp eigen ist,
- eine Steuereinheit (4), die mit dem Erfassungssensor (3) verbunden ist, um das mindestens eine Identifikationsmerkmal zu empfangen,
- Kommunikationsmittel (5), die erlauben, die Steuereinheit mit dem Internet zu verbinden und das mindestens eine Identifikationsmerkmal zu senden,
b) mindestens einem mit dem Internet (50) verbundenen Datenserver (6), der das von den Kommunikationsmitteln gesendete, mindestens eine Identifikationsmerkmal empfängt, wobei der Server eine Gesamtheit von Referenzdaten, die ein Sortiment von Kapseltypen betreffen, und Verarbeitungsmittel aufweist, um den verwendeten Kapseltyp mit Hilfe des empfangenen mindestens einen Identifikationsmerkmals und der Gesamtheit von Referenzdaten zu identifizieren,
**dadurch gekennzeichnet, dass** das Identifikationsmerkmal ein Farbmerkmal der Hülle der Kapsel aufweist.

2. System nach Anspruch 1, wobei der Getränkeautomat mindestens ein aus der folgenden Gruppe ausgewähltes Getränk oder flüssiges Nahrungsmittel zubereiten kann: Kaffee, Tee und Suppen.

3. System nach einem der vorstehenden Ansprüche, wobei der Sensor ein optischer Sensor ist und wobei der Automat eine Lichtquelle (8) aufweist und die Steuereinheit das mindestens eine Identifikationsmerkmal dadurch bestimmen kann, dass sie zwei Messungen durchführt, nämlich eine Messung mit Zwangsbeleuchtung durch die Lichtquelle (8) und eine Messung ohne Zwangsbeleuchtung.

4. System nach einem der vorstehenden Ansprüche, wobei der Sensor ein optischer Sensor ist und wobei die Gesamtheit von Referenzdaten zwei Identifikationsfarbmerkmale für jeden Kapseltyp aufweisen, nämlich eine reflektierte Farbe (31) und eine absorbierte und wieder emittierte Farbe (32).

5. Verfahren zum Identifizieren eines Typs einer Produktkapsel für ein Getränk oder flüssiges Nahrungsmittel, wobei die Kapsel dieses Typs in einem Getränkeautomaten verwendbar ist, der mit einem Datenserver verbunden werden kann, der eine Gesamtheit von Referenzdaten aufweist, wobei das Verfahren die folgenden Schritte aufweist:
- Erfassen mindestens eines Identifikationsmerkmals, das einer in den Automaten eingeführten Kapsel eigen ist, mit Hilfe eines Sensors in dem Automaten, wobei das Identifikationsmerkmal ein Farbmerkmal der Hülle der Kapsel aufweist,
- Senden dieses Identifikationsmerkmals von dem Automaten zu dem Datenserver,
- Vergleichen dieses Identifikationsmerkmals mit der Gesamtheit von Referenzdaten in dem Datenserver,
- Schlussfolgern auf den Typ der in den Automaten eingeführten Kapsel.

6. Verfahren zum Identifizieren eines Kapseltyps nach Anspruch 5, wobei das Verfahren aufweist:
- Erfassen von zwei Messwerten, nämlich eines ersten Messwerts, der aus einer Messung mit Zwangsbeleuchtung durch die Lichtquelle (8) gewonnen ist, und eines zweiten Messwerts, der aus einer Messung ohne Zwangsbeleuchtung gewonnen ist,
- Subtrahieren/Vergleichen des zweiten Messwerts von/mit dem ersten in dem Server,
- Schlussfolgern auf den Typ der in den Automaten eingeführten Kapsel.

7. Verfahren zum Identifizieren eines Kapseltyps nach Anspruch 5, wobei die Gesamtheit von Referenzdaten für jeden Kapseltyp eine reflektierte Farbe (31) und eine absorbierte und wieder emittierte Farbe (32) enthält, die zusammen ein vorab definiertes Merkmalvolumen in dem Farbraum Rot-Grün-Blau definieren, das für jeden Kapseltyp die zwei Messwerte enthält, wobei das Verfahren aufweist:
- Vergleichen dieses empfangenen Farbmerkmals mit jedem der bekannten vorab definierten Volumina in dem Datenserver,
- Schlussfolgern auf den Typ der in den Automaten eingeführten Kapsel mit Hilfe einer Näherungsberechnung.

## Claims

1. System (10) comprising
a) a machine (1) for preparing drinks using product capsules (2) for a food drink, the machine being configured to accept a plurality of different types of capsules, the machine comprising:
. a receptacle (7) designed to receive a capsule (2),
. an acquisition sensor (3) configured to acquire at least one identification characteristic specific to each type of capsule accepted by the machine,
. a control unit (4) connected to said acquisition sensor (3) for receiving said identification characteristic,
. communication means (5) configured to enable the control unit to be connected to the Internet network and transmit said at least one identification characteristic,
b) at least one computer server (6) connected to the Internet (50) configured to receive said at least one identification characteristic transmitted by said communication means, said server comprising a set of reference information relating to a range of capsule types and processing means for identifying the type of capsule used on the basis of said at least one identification characteristic received and the set of reference information,
**characterised in that** the identification characteristic comprises a colour characteristic of the capsule casing.

2. System as claimed in claim 1, wherein the machine for preparing drinks is configured to prepare at least one food drink selected from the group comprising coffee, tea and soups.

3. System as claimed in one of the preceding claims, wherein the sensor is an optical sensor and wherein the machine comprises a light source (8), and the control unit is configured to determine said at least one identification characteristic by taking two measurements, one measurement involving forced illumination of the light source (8) and one measurement without forced illumination.

4. System as claimed in one of the preceding claims, wherein the sensor is an optical sensor and wherein the set of reference information comprises, for each capsule type, two characteristic identification colours, a reflected colour (31) and an absorbed and re-emitted colour (32).

5. Method of identifying a type of product capsule for a food drink, configured to be used in a machine for preparing drinks which can be connected to a computer server comprising a set of reference information, comprising the steps:
- at least one identification characteristic specific to a capsule loaded in the machine is acquired by means of a sensor in the machine, the identification characteristic comprising a colour characteristic of the casing of the capsule,
- this identification characteristic is transmitted from the machine to the computer server,
- this identification characteristic is compared with a set of reference information in the computer server,
- the type of capsule loaded in the machine is derived therefrom.

6. Method of identifying a type of product capsule for a food drink as claimed in claim 5, wherein
- two measurements are acquired, a measurement with forced illumination by means of a light source (8) and a second measurement without forced illumination,
- the second measurement is subtracted from/compared with the first in the server,
- the type of capsule loaded in the machine is derived therefrom.

7. Method of identifying a type of product capsule for a food drink as claimed in claim 5, wherein the set of reference information contains, for each type of capsule, a reflected colour (31) and an absorbed and re-emitted colour (32) which together define a predefined characterisation volume in the red-green-blue colour space for each type of capsule encompassing said two measurements, by which method
- this received identification characteristic is compared with each of the known predefined volumes in the computer server,
- the type of capsule loaded in the machine is derived therefrom on the basis of a proximity calculation.
